# EUROPEAN PATENT APPLICATION

(11) **EP 4 333 475 A2**
(43) Date of publication of application: **06.03.2024**
(21) Application number: 24153433.8
(22) Date of filing: 23.01.2013
(51) Int. Cl.: H04W 4/80

(54) **METHOD AND SYSTEM FOR SWITCHING COORDINATOR IN A PERSONAL AREA NETWORK**

(30) Priority: 18.01.2013 IN 284CH2012
(62) Divisional of application: 20153681.0
(71) Applicant: Samsung Electronics Co., Ltd., Suwon-si, Gyeonggi-do 16677 (KR)
(72) Inventor: PATRO, Ranjeet Kumar, 560037 Bangalore (IN); ARUNAN, Thenmozhi, 560037 Bangalore (IN)
(74) Representative: Nederlandsch Octrooibureau

(57) **Abstract**

The present invention relates to methods, a coordinator and a device for switching coordinator in a personal area network. A method for switching coordinator in a personal area network including at least one coordinator and at least one device includes the steps of transmitting, by a coordinator, identification information of a new coordinator determined based on a location of the at least one device, to a device associated with the coordinator and releasing, by the coordinator, an association between the coordinator and the device.

## Description

### [Technical Field]

The present invention relates to method, apparatus and system for switching coordinator in a Personal Area Network (PAN). More specifically, the present invention relates to method, apparatus and system for switching coordinators based on certain conditions in a Wireless Personal Area Network (WPAN).

### [Background Art]

Wireless Personal Area Networks (WPANs) find application in number of real time situations. For example, WPANs are used in hospitals, transportation and logistics and the like to enable individual devices to interact with each other in a network zone. In such situations, devices are connected to each other within the zone to facilitate certain types of communication, including data, and short message transfer. In order to manage and coordinate communication between the devices, one or more PAN coordinators can be used.

IEEE 802.15.4 comprises networking protocols for WPANs, coordinators, and devices connected. For example, in a hospital environment, there can be one or more wireless sensory devices attached to the body of a patient. The sensory devices shall be configured to monitor multiple parameters. The sensory devices communicate with the PAN coordinators through wireless means, for example, to report collected parameters. During such situations, if the patient is to be shifted or relocated within the hospital premises with the attached sensory devices, suitable steps need to be performed to facilitate such a transition with appropriate power consumption. Conventional methods appear to be power consuming during the transition.

### [Disclosure]

### [Technical Problem]

The present invention provides a method and apparatus for switching coordinator in a Personal Area Network (PAN).

### [Technical Solution]

In an aspect of the present invention, a method of switching Personal Area Network (PAN) coordinators is provided. The method includes the steps of initiating a request for switching the one or more devices present in a network session to a first priority PAN coordinator, the request comprising a count of the one or more devices, transmitting the request comprising a requirement for supporting the one or more devices of that count, the request is transmitted to the first priority PAN coordinator, determining whether the first priority PAN coordinator is capable of supporting the one or more devices, and if yes, switching the network session of the one or more devices with the first priority PAN coordinator to facilitate establishment of the network session with the first priority PAN coordinator. Further, if the first priority PAN coordinator is not capable, the request is transmitted to the next priority PAN coordinator and the above mentioned steps after transmission of request are repeated to establish the network session.

In another aspect of the present invention, an apparatus for switching Personal Area Network (PAN) coordinator in a network with one or more devices is provided. The apparatus includes a processor, a memory connected to the processor, configured with one or more programs to perform a set of predefined instructions with the help of the processor, the memory comprising a coordinator switching module configured for initiating a request for switching the one or more devices present in a network session to a first priority PAN coordinator, the request comprising a count of the one or more devices, transmitting the request comprising a requirement for supporting the one or more devices of that count, the request is transmitted to the first priority PAN coordinator, determining whether the first priority PAN coordinator is capable of supporting the one or more devices, and if yes, switching the network session of the one or more devices with the first priority PAN coordinator to facilitate establishment of the network session with the first priority PAN coordinator. Further, if the first priority PAN coordinator is not capable, the request is transmitted to the next priority PAN coordinator and the above mentioned steps after transmission of request are repeated to establish the network session.

In yet another aspect of the present invention, a system is provided. The system comprising one or more devices, and a Personal Area Network (PAN) coordinator configured to manage communication of the one or more devices, the PAN coordinator comprises a memory and a processor, the memory includes a coordinator switching module configured to perform the steps of initiating a request for switching the one or more devices present in a network session to a first priority PAN coordinator, the request comprising a count of the one or more devices, transmitting the request comprising a requirement for supporting the one or more devices of that count, the request is transmitted to the first priority PAN coordinator, determining whether the first priority PAN coordinator is capable of supporting the one or more devices, and if yes, switching the network session of the one or more devices with the first priority PAN coordinator to facilitate establishment of the network session with the first priority PAN coordinator. Further, if the first priority PAN coordinator is not capable, the request is transmitted to the next priority PAN coordinator and the above mentioned steps after transmission of request are repeated to establish the network session.

### [Description of Drawings]

Figure 1 illustrates a system diagram where one or more devices connected to a Personal Area Network (PAN) coordinator.
Figure 2 is a flow diagram explaining a conventional method of switching PAN coordinators.
Figure 3 is flow diagram for switching PAN coordinators in accordance with an embodiment of the present invention.
Figure 4 is a flow chart illustrating steps involved in switching PAN coordinators in accordance with an embodiment of the present invention.
Figure 5a is a flow diagram providing one or more steps performed in a system to switch PAN coordinators in accordance with an embodiment of the present invention.
Figure 5b is a flow diagram providing one or more steps performed in a system to switch PAN coordinators in accordance with another embodiment of the present invention.
Figure 5c is a flow diagram providing one or more steps performed in a system to switch PAN coordinators in accordance with another embodiment of the present invention.
Figure 6 illustrates an exemplary structure of coordinator switch response frame in accordance with an embodiment of the present invention.
Figure 7 illustrates an exemplary structure of coordinator switch response frame in accordance with an embodiment of the present invention.
Figure 8 is a block diagram of a PAN coordinator in accordance with an embodiment of the present invention.
Figure 9 is a block diagram of one of the one or more devices in accordance with an embodiment of the present invention.

The figures that are provided in the present invention are for illustrative purposes only and in no way to be considered as limitations.

### [Mode for Invention]

In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

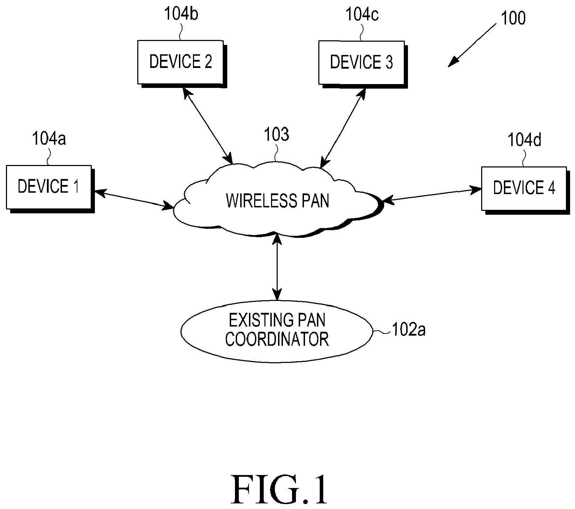

Figure 1 illustrates a system diagram where one or more devices connected to a Personal Area Network (PAN) coordinator.

System 100 includes a first device 104a, a second device 104b, a third device 104c, and a fourth device 104d, and a first PAN coordinator 102a. The devices 104a, 104b, 104c, and 104d are connected to the first PAN coordinator 102a through a Wireless Personal Area Network (WPAN) in accordance with an embodiment of the present invention. The system 100 can be applicable in number of real time situations. For example, the one or more devices 104a, 104b, 104c, and 104d can be sensory devices attached to a body of the patient in a hospital to monitor one or more physical parameters. The PAN coordinator 102a can be managing and coordinating communication of the one or more devices 104a, 104b, 104c, and 104d. Further, in another WPAN, another PAN coordinator may be present to assist in coordinating the communication of the devices 104a, 104b, 104c, and 104d when they are out of range of the first PAN coordinator 102a.

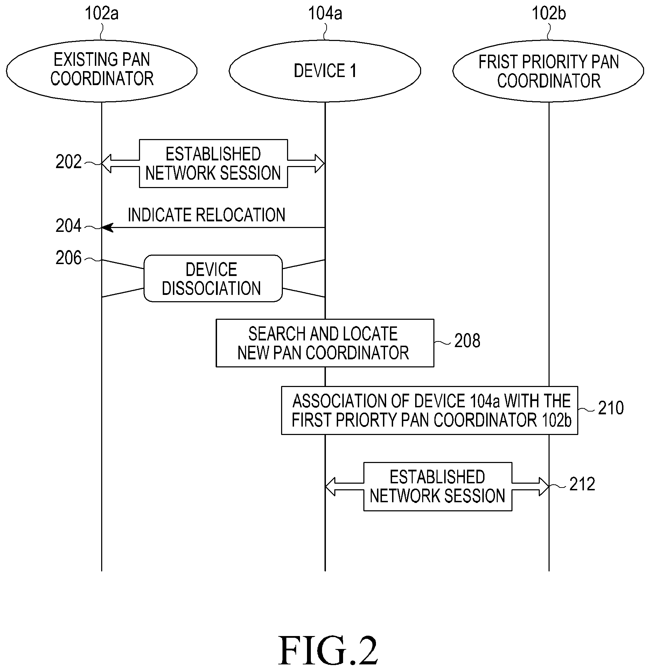

Figure 2 is a flow diagram explaining a conventional method of switching PAN coordinators. It shall be noted in the flow diagram that flow of steps occurs between the first PAN coordinator 102a, the first device 104a and a first priority PAN coordinator 102b. The first priority PAN coordinator 102b can be a candidate PAN coordinator 102b that can connect with one or more devices within the network and coordinate the communication.

Moreover, the flow diagram depicts an example of the existing or conventional method of switching PAN coordinator in the PAN. The first PAN coordinator 102a and the first device 104a are assumed to be in an established network session. The network session is referred in step 202 of the flow diagram. In step 204, the device 104a indicates the movement to a new location to the first PAN coordinator 104a. In an alternative embodiment, the first PAN coordinator 102a may detect that location of the first device 104a is out of network zone. There can be many reasons for change in location of the first device 104a. For example, if the first device 104a is attached to body of the patient, when the patient moves, the first device 104a moves along. In step 206, the network session between the first PAN coordinator 102a and the first device 104a is turned off due to dissociation. In the present example, the dissociation occurred because of the relocation of the first device 104a.

In step 208, the first device 104a may constantly search and locate new PAN coordinators within the network range. The searching and locating of the new PAN coordinators within a network zone is a power consuming activity for the device 104a. For example, when the device 104a locates the first priority PAN coordinator 102b as the new coordinator, in step 210, the first priority PAN coordinator 102b and the device 104a forms an association. Thereafter, in step 212 a new network session is established between the second PAN coordinator 102b and the first device 104a. Further, there may be other number of steps involved in re-establishing the network session.

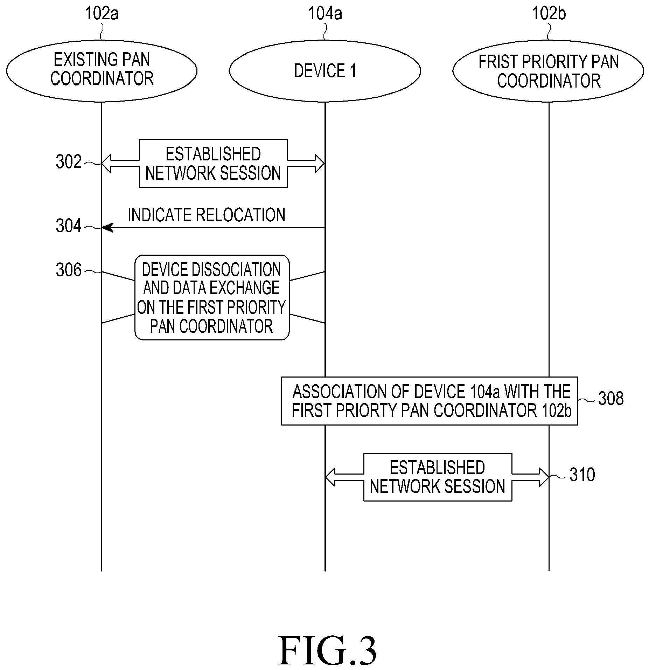

Figure 3 is flow diagram for switching PAN coordinators in accordance with an embodiment of the present invention.

The flow diagram in accordance with the present embodiment provides scheme of events occurring the system to perform switching of PAN coordinators. In step 302, a network session is established between the existing PAN coordinatorand the device 104a. In step 304, the device 104a indicates the first PAN coordinator 102a about relocation which may take the first device 104a out of network zone. On receiving the indication from the device 104a, in step 306, the PAN coordinator 102a shares the information of the first priority PAN coordinator 102b for facilitating switching of the PAN coordinator from the first PAN coordinator 102a to the first priority PAN coordinator 102b. In the same step 306, the PAN coordinator 102a and the device 104a dissociate from each other.

In step 308, the device 104a and the first priority PAN coordinator 102b form an association and thereafter, in step 310, a network session is established between the device 104a and the first priority PAN coordinator 102b. During the switching of coordinator, the first coordinator 102a determines whether the first priority PAN coordinator 102b is capable of performing network coordination and communication management of the device 104a and in case, multiple devices are to be connected to the first priority PAN coordinator 102b, then count of the multiple devices is taken into account.

It may be noticed that step 208 present in the flow diagram of figure 2 is not performed by the device 104a in the figure 3. The step of searching and locating the suitable PAN coordinator is performed by the first PAN coordinator 102a. Hence, the power consuming activity is negated in accordance with the present embodiment of the invention.

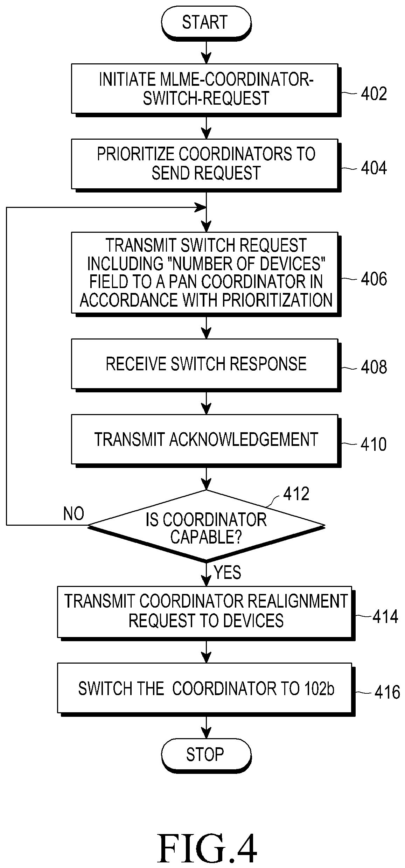

Figure 4 is a flow chart illustrating steps involved in switching PAN coordinators in accordance with an embodiment of the present invention.

In accordance with the present embodiment, a method 400 includes a plurality of steps to perform switching of PAN coordinators. In the step 402, a Mac Layer Management Entity (MLME) coordinator switch request is initiated at the first PAN coordinator 102a. The request is intended for switching one or more devices connected to an existing PAN coordinator to a new PAN coordinator. The initiation may happen between frame transfers between a Media Access Control (MAC) layer of the PAN coordinator 102a (the existing PAN coordinator) and a first network layer. The first network layer may be contributing to any device connected to the PAN coordinator 102a. In step 404, the PAN coordinator 102a may configure a priority table within to determine potential new PAN coordinators to perform the switch over based on certain criteria. For example, the priority table may include list of PAN coordinators that are candidates for switching in the future, their address and information.

In step 406, the first PAN coordinator 102a transmits a switch request including "count of devices" field to the first priority PAN coordinator 102b (the new PAN coordinator). The count of devices may refer to the number of devices that are connected to the first PAN coordinator 102a and are intended to be switched to the first priority PAN coordinator 102b. The count of devices is a requirement for the second PAN coordinator 102b for establishing capability. This step may ensure the first PAN coordinator 102a to prove the capability of replacing the coordination and management activities by the first priority PAN coordinator 102b successfully.

In step 408, the first priority PAN coordinator 102b provides or transmits a response for the request raised in the step 406, the response is received at the first PAN coordinator 102a. For example, in one or more embodiments, since the communication between the PAN coordinators and the devices connected occur in the MAC layer of the network, the data is shared in the form of frames in accordance with the protocols of Wireless PAN. For example, the response frame from the first priority PAN coordinator 102b includes 'switch status' as one of the fields denoting status of switching to the first PAN coordinator 102a. In step 410, an acknowledgement frame is transmitted by the first PAN coordinator 102a to the first priority PAN coordinator 102b. Further, the acknowledgement frame shall be provided by the first PAN coordinator 102a within a threshold time.

On receiving the response from the first priority PAN coordinator 102b, the first PAN coordinator 102a, in step 412, determines whether the first priority PAN coordinator 102b is capable of coordinating and managing the communication of the devices with the count or number of devices, as transmitted in the request. If yes, in step 414, the first PAN coordinator 102a transmits a coordinator realignment request frame to the first priority PAN coordinator 102b. If no, in step 412, the first PAN coordinator 102a transmits a switch request frame to a second priority PAN coordinator in accordance with the priority table and repeats steps 408, 410 and 412 until it finds the capable PAN coordinator for coordinating and managing the communication of the devices with the count or number of devices transmitted in the request. Thereafter, the first priority PAN coordinator 102b and the device 104b establish a realigned network session. As denoted in step 416, the method concludes with completion of the switching the PAN coordinator.

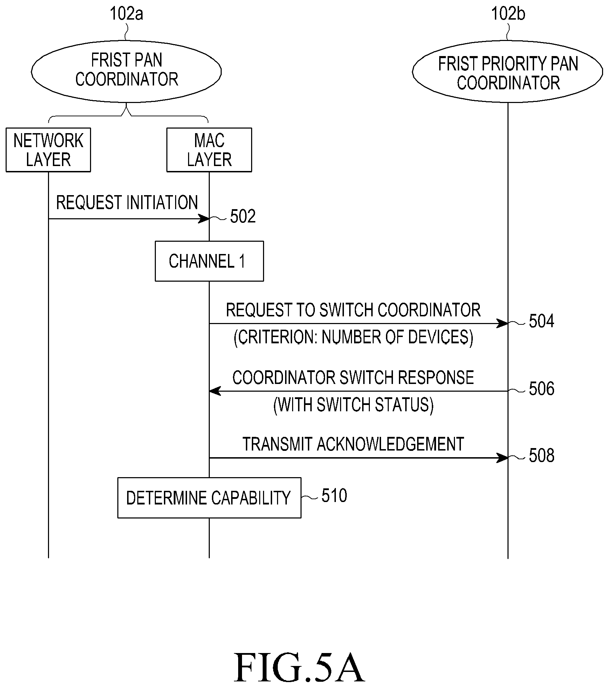

Figure 5a is a flow diagram providing one or more steps performed in a system to switch PAN coordinators in accordance with an embodiment of the present invention.

In step 502, a request for switching one or more devices present in a network session with the first PAN coordinator 102a is initiated. The request includes a count of the one or more devices. The request is initiated by transfer of frames between the network layer and the MAC layer of the first PAN coordinator 102a. The first PAN coordinator 102a may prioritize the PAN coordinators that present in the network in vicinity. A priority table is created with list of PAN coordinators that are suitable candidates for the coordinator switching. In step 504, at channel 1, the first PAN coordinator 102 transmits a request to switch the one or more devices connected to it to the first priority PAN coordinator 102b. The request includes a count of number of devices connected to or is in network session with the first PAN coordinator 102a. The first priority PAN coordinator 102b may be present at top of the priority table which includes the list of other suitable PAN coordinators. There may multiple factors involved in prioritizing suitable PAN coordinators. Those factors are known to the person skilled in the art and will not be discussed further.

In step 506, the first priority PAN coordinator 102b provides a response to the request. The response more importantly, includes a switch status. On receiving the response from the first priority PAN coordinator 102b, the first PAN coordinator 102a transmits an acknowledgement frame at 508, the acknowledgement frame may be sent within a threshold time after receiving the response. The first PAN coordinator 102a determines the capability of the first priority PAN coordinator 102b whether it can handle and coordinator communication of the one or more devices, based on the response.

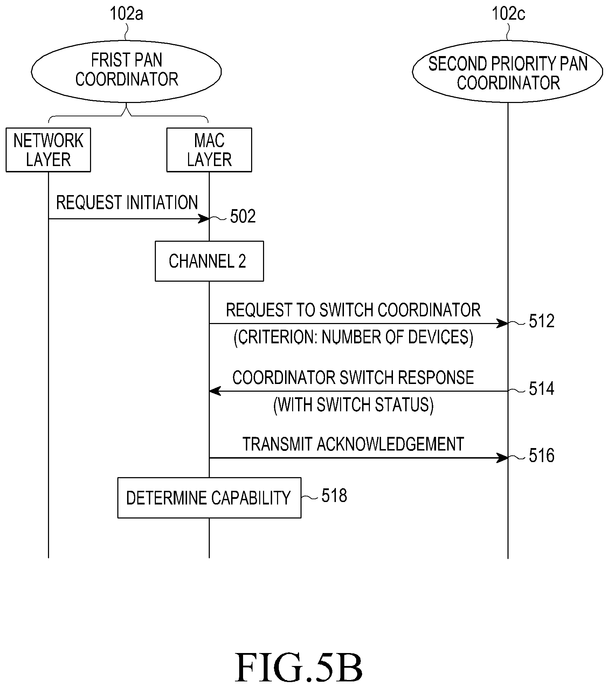

Figure 5b is a flow diagram providing one or more steps performed in a system to switch PAN coordinators in accordance with another embodiment of the present invention.

In the present embodiment, if the first PAN coordinator 102a determines that the first priority PAN coordinator 102b is not capable, in step 512, transmits the request for switching to a second priority PAN coordinator 102c. While transmitting, the first PAN coordinator 102a may select 'Channel 2', another channel for communicating with the second priority PAN coordinator 102c. Steps 512 (request for switching), 514 (reception of coordinator switch response), 516 (transmission of acknowledgement), and 518 (determination of capability of the second priority PAN coordinator 102c) are similar to the steps 504, 506, 508, and 510. Hence, explanation to the mentioned steps is forfeited.

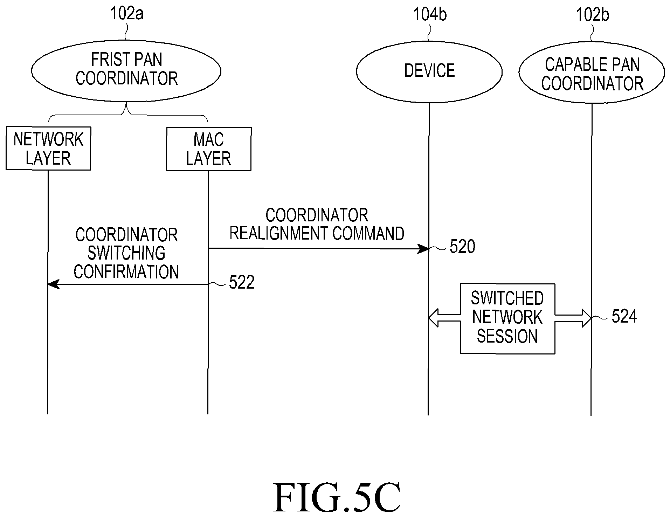

Figure 5c is a flow diagram providing one or more steps performed in a system to switch PAN coordinators in accordance with another embodiment of the present invention.

In accordance with the present embodiment, the first PAN coordinator 102a has determined that the first priority PAN coordinator 102b is capable for handling and coordinating communication of the one or more devices connected to the first PAN coordinator 102a.

In step 520, a coordinator realignment command frame is transmitted by the first PAN coordinator 102a to the device 104b. Thereafter, the MAC layer of the first PAN coordinator 102a transmits a confirmation of switching of coordinator to the network layer. In step 524, the device 104b and a capable PAN coordinator establish a switched network session with each other. For example, if the first priority PAN coordinator 102b is determined capable of coordinating and managing communication of the number or count of devices connected to the first PAN coordinator 102a, then the capable PAN coordinator in accordance with the present embodiment shall be the first priority PAN coordinator 102b. For another example, if the first priority PAN coordinator 102b is determined to be incapable of supporting the number or count of devices connected to the first PAN coordinator 102a, then the capable PAN coordinator in accordance with the present embodiment shall be the second priority PAN coordinator 102c.

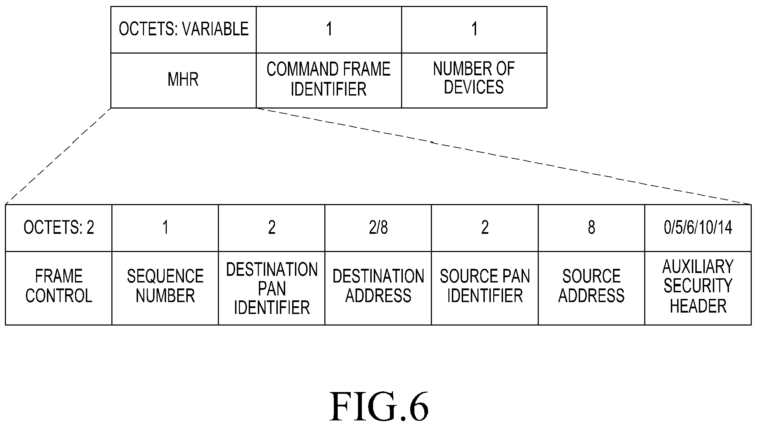

Figure 6 illustrates an exemplary structure of a coordinator-switch-request frame in accordance with an embodiment of the present invention.

The coordinator-switch-request frame includes primarily a Message Header (MHR), a command frame identifier, and 'number of devices'. MHR field of Coordinator Switch Request frame is included in a broadcast transmission from a PAN Coordinator in the Personal Area Network.

In an embodiment, a 'Destination Addressing Mode' field shall be included in the request to indicate short addressing, and 'Source Addressing Mode' shall be included in the request to indicate extended addressing, when coordinator switch request is broadcasted in a selected channel. Further, during the transmission of request, A 'Destination PAN Identifier' field be included which shall contain the PAN identifier that is broadcasted and a 'Destination Address Field' be included which shall contain the broadcast short address.

In an embodiment, a 'Source PAN Identifier' shall contain the value of MAC identifier of the PAN coordinator that imitates the request. In the same embodiment, 'Source Address' contains the value of 'macExtendedAddress' of the PAN coordinator that intends to switch.

In one of the embodiments, the coordinator switch request command can be unicasted to a new PAN coordinator. In such effectuation, the request includes the destination addressing field which is set to include an extended addressing. Further, the destination PAN identifier field includes 'macPANID' of the new PAN coordinator and the destination address field includes the 'macExtendedAddress' of the new PAN coordinator. Further, in an expansive embodiment, the 'source PAN identifier field' includes the value of 'macPANID' of the existing PAN coordinator and the 'source address field' contains the value of 'macExtendedAddress' of the new PAN coordinator that intends to switch.

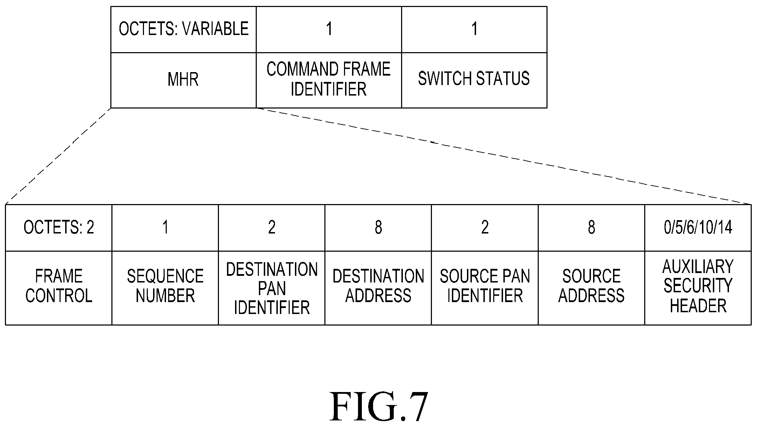

Figure 7 illustrates an exemplary structure of a coordinator switch response frame in accordance with an embodiment of the present invention.

In accordance with the present embodiment, the coordinator switch response frame transmitted by a new PAN coordinator intending to switch includes MHR, a command frame identifier, and a 'switch status'. For example, the command frame identifier value of a command frame identifier may be 0xA0. In an embodiment, the 'switch status' may refer to when the new PAN coordinator responds to the unicast coordinator switch request from the existing PAN coordinator with the field of status set to yes, it indicates that it has confirmed its status as the new PAN coordinator. Further, description of fields of MHR is explained in the description of figure 6.

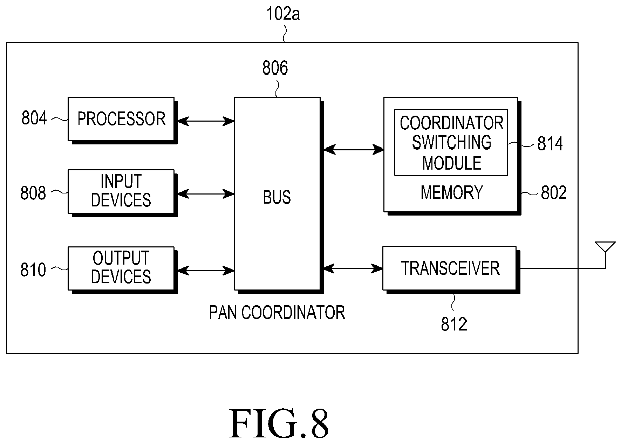

Figure 8 is a block diagram of the first PAN coordinator 102a in accordance with an embodiment of the present invention. The first PAN coordinator 102a includes a memory 802, a processor 804, a bus 806, input devices 808, output devices 810, and a transceiver 812.

The memory 802 includes a coordinator switching module 814 configured to perform switching of PAN coordinators in the network. In an embodiment, the coordinator switching module 814 includes one or programs and resides in the memory 802. The one or more programs are executed with the help of processor 804. The coordinator switching module 814 is configured for initiating a request for switching the one or more devices present in a network session to a first priority PAN coordinator, the request comprising a count of the one or more devices, transmitting the request comprising a requirement for supporting the one or more devices of that count, the request is transmitted to the first priority PAN coordinator, determining whether the first priority PAN coordinator is capable of supporting the one or more devices, and if yes, switching the network session of the one or more devices with the first priority PAN coordinator to facilitate establishment of the network session with the first priority PAN coordinator. Further, the coordinator switching module is configured to perform one or more steps as illustrated in figures 4, 5a, 5b, and 5c at the end of the first PAN coordinator 102a.

Furthermore, the memory 800 may be volatile memory and non-volatile memory. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling memory cards, Memory SticksTM, and the like.

The processor 804, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 804 may also include embedded controllers, such as generic or programmable logic devices or arrays, application specific integrated circuits, single-chip computers, smart cards, and the like. The transceiver 812 is for signal reception and transmission with the network. It is provided as an example that the transceiver 812 is present as a single unit. However, the transceiver 812 may be present as a separated unit with receiver and transmitter.

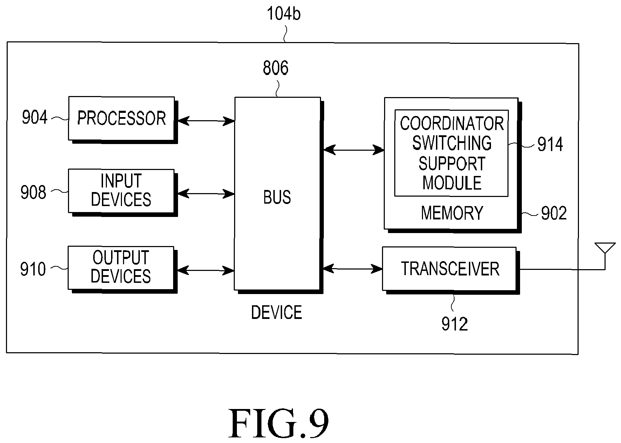

Figure 9 is a block diagram of one of the one or more devices in accordance with an embodiment of the present invention.

The second device 104b includes a memory 902, a processor 904, a bus 906, input devices 908, output devices 910, and a transceiver 912. The memory 902 includes a coordinator switching support module 914. The coordinator switching support module 914 may be configured with one or more programs to support switching of PAN coordinators in the network. In an embodiment, the coordinator switching support module 914 is capable of performing one or more steps occurring at the end of the second device 104b in the figures 4, 5a, 5b, and 5c. Other components of the second device 104b are known to the persons skilled in the art and will not be explained further. Embodiments of the present subject matter may be implemented in conjunction with modules, including functions, procedures, data structures, and application programs, for performing tasks, or defining abstract data types or low-level hardware contexts. Machine-readable instructions stored on any of the above-mentioned storage media may be executable by a processor.

The present embodiments have been described with reference to specific example embodiments. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit. Aspects of the invention can also be understood from the following clauses:
Clause 1: A method of switching Personal Area Network (PAN) coordinators, comprising:
   initiating a request for switching the one or more devices present in a network session to a first priority PAN coordinator, the request comprising a count of the one or more devices;
   transmitting the request to the first priority PAN coordinator, the request comprising a requirement for supporting the one or more devices of that count;
   determining whether the first priority PAN coordinator is capable of supporting the one or more devices; and
   if yes, switching the network session of the one or more devices with the first priority PAN coordinator to facilitate establishment of the network session with the first priority PAN coordinator.
Clause 2: The method as recited in clause 1, wherein in transmitting the request with a requirement for supporting the one or more devices, the step comprises:
   selecting the first priority PAN coordinator based on a priority table.
Clause 3: The method as recited in clause 1, wherein in determining whether the first priority PAN coordinator is capable of supporting the one or more devices, the step comprises:
   if no, transmitting the request to a second priority PAN coordinator with the request including the requirement for supporting the one or more devices of that count.
Clause 4: The method as recited in clause 1, further comprising:
   transmitting an acknowledgement frame on receiving the response from the first priority PAN coordinator, wherein the response is received within a threshold time.
Clause 5: The method as recited in clause 1, wherein in switching the network session of the one or more devices with the first priority PAN coordinator to facilitate establishment of the network session with the first priority PAN coordinator, the step comprises:
   transmitting a coordinator realignment command to the one or more devices designating the first priority PAN coordinator as a candidate PAN coordinator.
Clause 6: The method as recited in clause 4, further comprising:
   transmitting a coordinator switching confirmation to a first network layer from a Media Access Control (MAC) layer.
Clause 7: The method as recited in clause 4, wherein the coordinator realignment command includes address and channel information of the first priority PAN coordinator.
Clause 8: The method as recited in clause 1, wherein the request further comprises a Message Header (MHR), a command frame identifier.
Clause 9: The method as recited in clause 1, wherein the response command is received from the first priority PAN coordinator, the response command comprises a MHR, a command frame identifier, and a Switch Status.
Clause 10: An apparatus for switching Personal Area Network (PAN) coordinator in a network with one or more devices, comprising:
   a processor;
   a memory connected to the processor, configured with one or more programs to perform a set of predefined instructions with the help of the processor, the memory comprising a coordinator switching module configured for:
      initiating a request for switching the one or more devices present in a network session to a first priority PAN coordinator, the request comprising a count of the one or more devices;
      transmitting the request to the first priority PAN coordinator, the request comprising a requirement for supporting the one or more devices of that count;
      determining whether the first priority PAN coordinator is capable of supporting the one or more devices; and
      if yes, switching the network session of the one or more devices with the first priority PAN coordinator to facilitate establishment of the network session with the first priority PAN coordinator.
Clause 11: The apparatus of clause 10, wherein in transmitting the request comprising a requirement for supporting the one or more devices, the coordinator switching module performs the steps of selecting the first priority PAN coordinator based on a priority table.
Clause 12: The apparatus of clause 10, wherein the coordinator switching module is further configured for:
   transmitting an acknowledgement frame on receiving the response from the first priority PAN coordinator, wherein the response is received within a threshold time.
Clause 13: The apparatus of clause 10, wherein the coordinator switching module is further configured for:
   transmitting a coordinator realignment command to the one or more devices designating the first priority PAN coordinator as the PAN coordinator.
Clause 14: The apparatus of clause 10, wherein in determining whether the first priority PAN coordinator is capable of supporting the one or more devices, the coordinator switching module further configured for:
   transmitting the request to a second priority PAN coordinator on determining that the first priority PAN coordinator is incapable, the request includes the requirement for supporting the one or more devices of that count.
Clause 15: A system comprising:
   one or more devices;
   a Personal Area Network (PAN) coordinator configured to manage communication of the one or more devices, the PAN coordinator comprises a memory and a processor, the memory includes a coordinator switching module configured to perform the steps of:
      initiating a request for switching the one or more devices present in a network session to a first priority PAN coordinator, the request comprising a count of the one or more devices;
      transmitting the request to the first priority PAN coordinator, the request comprising a requirement for supporting the one or more devices of that count;
   determining whether the first priority PAN coordinator is capable of supporting the one or more devices; and
   if yes, switching the network session of the one or more devices with the first priority PAN coordinator to facilitate establishment of the network session with the first priority PAN coordinator.
Clause 16: The system in accordance with clause 15, wherein the one or more devices comprises a memory and a processor, the memory configured with one or more programs to facilitate switching PAN coordinators in the network, the one or more programs is configured to perform a step of assisting in initiation of the request for switching PAN coordinators.

## Claims

1. A method for switching coordinator in a personal area network, PAN, including at least one coordinator and at least one device, the method comprising:
establishing (302), by a PAN coordinator (102a), a network session between the PAN coordinator (102a) and the at least one device;
transmitting (306, 520), by the PAN coordinator (102a), through the established network session (302), a frame including information of a first priority PAN coordinator (102b) to the at least one device for switching of a PAN coordinator from the PAN coordinator (102a) to the first priority PAN coordinator (102b); and
releasing (306), by the PAN coordinator (102a), the network session between the PAN coordinator (102a) and the at least one device,
wherein the frame includes:
a destination PAN identifier field indicating a PAN identifier of the first priority PANcoordinator, and
a destination address field indicating an address of the first priority PAN coordinator.

2. The method of claim 1, wherein the frame further includes a destination addressing mode field, and a source addressing mode field to indicate a short address or a extended address for a destination address or a source address.

3. The method of claim 1, wherein the transmitting the information of the new coordinator comprises:
transmitting (504), a switch request to the first priority PAN coordinator;
determining (510) whether the first priority PAN coordinator is capable of supporting the at least one device; and
transmitting (520), when the first priority PAN coordinator is capable of supporting the at least one device, the frame to the at least one device,
wherein the first priority PAN coordinator is determined based on a priority table for the at least one coordinator.

4. The method of claim 2, wherein the determining whether the first priority PAN coordinator is capable of supporting the at least one device comprises:
transmitting (512), when the first priority PAN coordinator is not capable of supporting the at least one device, the switch request to a second priority PAN coordinator determined based on the priority table, wherein the switch request includes a requirement for supporting the at least one device.

5. The method of claim 2, further comprising:
transmitting (508), by the PAN coordinator, an acknowledgement to the first priority PAN coordinator on receiving a response from the first priority PAN coordinator,
wherein the response is received within a threshold time.

6. A personal area network, PAN, coordinator (102a) for switching coordinator in a PAN including at least one coordinator and at least one device, the PAN coordinator comprising:
a transceiver (812) is configured to establish a network session between the PAN coordinator (102a) and the at least one device, ,
transmit, through the established network session, a frame including information of a first priority PAN coordinator (102b) to the at least one device for switching of a PAN coordinator from the PAN coordinator(102a) to the first priority PAN coordinator(102b); and
a processor (804) is configured to release the network session between the PAN coordinator (102a) and the at least one device,
wherein the frame includes:
a destination PAN identifier field indicating a PAN identifier of the first priority PAN coordinator, and
a destination address field indicating an address of the first priority PAN coordinator,

7. The PAN coordinator of claim 6, wherein the frame further includes a destination addressing mode field and a source addressing mode field to indicate a short address or a extended address for a destination address or a source address.

8. The PAN coordinator of claim 6, wherein the transceiver is configured to transmit a switch request to the first priority PAN coordinator, and
wherein the processor is configured to determine whether the first priority PAN coordinator is capable of supporting the at least one device, and
wherein the transceiver is further configured to transmit, when the first priority PAN coordinator is capable of supporting the at least one device, the frame to the at least one device,
wherein the first priority PAN coordinator is determined based on a priority table for the at least one coordinator.

9. The PAN coordinator of claim 8, wherein the transceiver is configured to:
transmit an acknowledgement to the first priority PAN coordinator on receiving the response from the first priority PAN coordinator, wherein the response is received within a threshold time.

10. The PAN coordinator of claim 8, wherein in determining whether the first priority PAN coordinator is capable of supporting the at least one device, the transceiver is configured to:
transmit, when the first priority PAN coordinator is not capable of supporting the at least one device, the switch request to a second priority PAN coordinator determined based on the priority table, wherein the switch request includes a requirement for supporting the at least one device.

11. A method for coordinator switching in a personal area network, PAN, including at least one coordinator and at least one device, the method comprising:
establishing (302), by a device, a network session between said device and at least one coordinator;
receiving (306, 520), by the device, through the established network session (302), a frame including information of a first priority PAN coordinator (102b) from a PAN coordinator (102a) for switching of a PAN coordinator from the PAN coordinator (102a) to the first priority PAN coordinator (102b);
releasing (306), by the device, the network session between the PAN coordinator (102a) and the device; and
establishing (310), by the device, a new network session between the device and the first priority PAN coordinator (102b),
wherein the frame includes:
a destination PAN identifier field indicating a PAN identifier of the first priority PAN coordinator, and
a destination address field indicating an address of the first priority PAN coordinator.

12. The method of claim 11, wherein the frame further includes a destination addressing mode field and a source addressing mode field to indicate a short address or a extended address for a destination address or a source address.

13. A device (104a, 104b) for coordinator switching in a personal area network, PAN, including at least one coordinator and the at least one device, the device comprising:
a transceiver (912) configured to establish (302) a network session between said device and at least one coordinator, receive, through the established network session, a frame including information of a first priority PAN coordinator (102b) from a PAN coordinator (102a) for switching of a PAN coordinator from the PAN coordinator (102a) to the first priority PAN coordinator (102b); and
a controller (904) configured to release the network session between the PAN coordinator (102a) and the device, and establish a new network session with the first priority PAN coordinator (102b) ,
wherein the frame includes:
a destination PAN identifier field indicating a PAN identifier of the first priority PAN coordinator,
a destination address field indicating an address of the first priority PAN coordinator.

14. The device of claim 13,wherein the frame further includes a destination addressing mode field and a source addressing mode field to indicate a short address or a extended address for a destination address or a source address.
